(19) Europäisches Patentamt / European Patent Office / Office européen des brevets

(11) **EP 3 247 918 B1**

(12) **EUROPÄISCHE PATENTSCHRIFT**

(45) Veröffentlichungstag und Bekanntmachung des Hinweises auf die Patenterteilung:
**18.09.2019  Patentblatt 2019/38**

(21) Anmeldenummer: **15707037.6**

(22) Anmeldetag: **21.01.2015**

(51) Int Cl.:
**F16D 13/58** *(2006.01)*   **F16D 13/75** *(2006.01)*
**F16D 25/04** *(2006.01)*   **F16D 48/02** *(2006.01)*
**F16D 25/08** *(2006.01)*

(86) Internationale Anmeldenummer:
**PCT/DE2015/200010**

(87) Internationale Veröffentlichungsnummer:
**WO 2016/116084 (28.07.2016 Gazette 2016/30)**

(54) **KUPPLUNGSSYSTEM**

CLUTCH SYSTEM

SYSTÈME D'EMBRAYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.11.2017  Patentblatt 2017/48**

(73) Patentinhaber: **Schaeffler Technologies AG & Co. KG**
**91074 Herzogenaurach (DE)**

(72) Erfinder:
• **BOHNEN, Jens**
  **77756 Hausach (DE)**
• **VOGEL, Florian**
  **77815 Bühl (DE)**
• **HAUSNER, Markus**
  **76534 Baden-Baden (DE)**
• **WAGNER, Philippe**
  **67460 Souffelweyersheim (FR)**

(56) Entgegenhaltungen:
DE-A1- 3 128 424     DE-A1-102013 206 548
GB-A- 2 269 866     US-A1- 2005 121 282

**Beschreibung**

Die vorliegende Erfindung betrifft ein Kupplungssystem mit einer Kupplungsvorrichtung, insbesondere mit einer Reibungskupplung für einen Antriebsstrang eines Kraftfahrzeugs.

Aus der älteren, nicht vorveröffentlichten DE 10 2014 211 468 A1 ist eine Kupplungsvorrichtung mit einer Gegendruckplatte, einem Kupplungsdeckel mit einer auf einem Schwenkradius verschwenkbar gelagerten Tellerfeder, und einer in axialer Richtung der Kupplungsvorrichtung durch die Tellerfeder begrenzt verlagerbaren Anpressplatte zur reibschlüssigen Klemmung einer Kupplungsscheibe zwischen der Anpressplatte und der Gegendruckplatte bekannt. Die Tellerfeder wirkt auf einem in radialer Richtung der Kupplungsvorrichtung außerhalb des Schwenkradius angeordneten Wirkradius auf die Anpressplatte und ist auf einem in radialer Richtung innerhalb des Schwenkradius angeordneten Betätigungsradius durch eine Betätigungsvorrichtung, beispielsweise ein Ausrücksystem, genauer gesagt ein Ausrücklager des Ausrücksystems, betätigbar. Generell ist die Übersetzung der Kupplungsvorrichtung, genauer gesagt die Übersetzung der Druckplattenbaugruppe, iDP definiert als: iDP = (Schwenkradius - Betätigungsradius) / (Wirkradius - Schwenkradius). Die Druckplattenbauruppe ist eine vormontierbare Unterbaugruppe der Kupplungsvorrichtung, d.h. der eigentlichen Reibungskupplung, und umfasst üblicherweise sämtliche Bauteile der Kupplungsvorrichtung abzüglich der Gegendruckplatte und der Kupplungsscheibe.

Um die Übersetzung der Kupplungsvorrichtung bzw. der Druckplattenbaugruppe ohne Austausch des Kupplungsdeckels verändern zu können, wird in der DE 10 2014 211 468 A1 ein Kupplungsdeckel mit zwei konzentrischen, ringförmigen Aufnahmesicken zur Aufnahme eines entsprechenden Drahtrings, der einen Teil der verschwenkbaren Lagerung der Tellerfeder bildet, vorgeschlagen. Wenn die verschwenkbare Lagerung der Tellerfeder mittels des Drahtrings, der in der in radialer Richtung innen angeordneten Aufnahmesicke eingelegt ist, ausgebildet wird, ist eine kleinere Übersetzung der Druckplattenbaugruppe iDP möglich. Wenn die verschwenkbare Lagerung mittels des Drahtrings, der in der in radialer Richtung außen angeordneten Aufnahmesicke eingelegt ist, ausgebildet wird, ist eine größere Übersetzung der Druckplattenbaugruppe iDP möglich. Bekannte Übersetzungen der Druckplattenbaugruppe liegen zwischen 2,6 und 4,5, insbesondere zwischen 3,1 und 4.

In der Vergangenheit wurden Kupplungsvorrichtung und Betätigungsvorrichtung unabhängig voneinander optimiert. Für die Kupplungsvorrichtung bedeutete dies, dass das Übersetzungsverhältnis der Druckplattenbaugruppe in einem Bereich von 2,6 bis 4,5 als Standard in der Automobilindustrie angesehen wurde, insbesondere auch, weil bei den Automobilherstellern die Kupplungsvorrichtung und die Betätigungsvorrichtung üblicherweise unterschiedlichen, in der Entwicklung voneinander getrennten, Sachgebieten zugeordnet sind. Die Kupplungsvorrichtung ist üblicherweise dem Sachgebiet Antriebsstrang zugeordnet, während die Betätigungsvorrichtung üblicherweise dem Sachgebiet Chassis zugeordnet ist. Somit hat eine optimale Auslegung des gesamten Kupplungssystems, bestehend aus der Kupplungsvorrichtung und der Betätigungsvorrichtung bisher nicht stattgefunden.

Aus der DE 10 2013 206 548 A1 ist ein Kupplungssystem bekannt, das auf den Oberbegriff des Patentanspruchs 1 lesbar ist.

Es ist Aufgabe der vorliegenden Erfindung, eine Möglichkeit anzugeben, um ein Kupplungssystem global zu optimieren.

Erfindungsgemäß gelöst wird diese Aufgabe durch ein Kupplungssystem gemäß Patentanspruch 1 mit einer Kupplungsvorrichtung und einer fluidischen Betätigungsvorrichtung zum Ein- und/oder Ausrücken der Kupplungsvorrichtung , wobei die Kupplungsvorrichtung zumindest eine Gegendruckplatte, zumindest einen Kupplungsdeckel mit zumindest einer auf einem Schwenkradius verschwenkbar gelagerten Tellerfeder, und zumindest eine in axialer Richtung der Kupplungsvorrichtung durch die Tellerfeder begrenzt verlagerbaren Anpressplatte zur reibschlüssigen Klemmung einer Kupplungsscheibe zwischen der Anpressplatte und der Gegendruckplatte aufweist, wobei die Tellerfeder auf einem in radialer Richtung der Kupplungsvorrichtung außerhalb des Schwenkradius angeordneten Wirkradius auf die Anpressplatte wirkt und auf einem in radialer Richtung innerhalb des Schwenkradius angeordneten Betätigungsradius durch die Betätigungsvorrichtung betätigbar ist, wobei gilt: iDP = (Schwenkradius - Betätigungsradius) / (Wirkradius - Schwenkradius) >= 5, und wobei die fluidische Betätigungsvorrichtung zumindest einen mittelbar oder unmittelbar auf die Tellerfeder wirkenden Nehmerzylinder mit einem Nehmerkolben und zumindest einen fluidisch mit dem Nehmerzylinder verbundenen Geberzylinder mit einem Geberkolben aufweist, wobei bezüglich der Kolbenflächen gilt: iH = (Fläche Nehmerkolben) / (Fläche Geberkolben), wobei 1,5 <= iH <= 3,5. Hierdurch ist eine Steigerung des Wirkungsgrades des gesamten Kupplungssystems durch Verringerung der Wegverluste in der fluidischen Betätigungsvorrichtung möglich.

Bezogen auf den wegbezogenen Wirkungsgrad des gesamten Kupplungssystems ergeben sich für die Kupplungsvorrichtung die folgenden Effekte:

- Durchbiegung der Tellerfederzungen: Durch die Betätigungsvorrichtung wird die Tellerfeder beim Ausrücken an den Tellerfederzungen mit der Ausrückkraft beaufschlagt. Dabei werden die Tellerfederzungen zunächst soweit in axialer Richtung durchgebogen, bis ihre Federkraft der anliegenden Ausrückkraft entspricht. Der hierfür aufgewendete Weg wird nicht gemäß der Übersetzung der Kupplungsvorrichtung bzw. der Druckplattenbaugruppe in Abhub umgewandelt, sondern muss zusätzlich aufgebracht werden. Durch steifere Tellerfederzungen und/oder geringere Ausrückkräfte kann dieser Wegverlust reduziert werden. Erfindungsgemäß ist bei einer höheren Übersetzung der Druckplattenbaugruppe die Ausrückkraft geringer, wodurch die Durchbiegung der Tellerfederzungen verringert wird.

- Deckelfederung: Im eingerückten Zustand der Kupplungsvorrichtung, dem sogenannten Betriebspunkt, stützt sich der Kraftrand der Tellerfeder an der Anpressplatte, genauer gesagt an den Anpressplattennocken, sowie an einer Auflage am Kupplungsdeckel, die üblicherweise durch einen in einer kupplungsdeckelseitigen Aufnahmesicke eingelegten Drahtring ausgebildet ist, ab. Die auf den Kupplungsdeckel wirkende Axialkraft ist von der Anpresskraft der Kupplung abhängig und lässt den Kupplungsdeckel in Abhängigkeit von der axialen Deckelsteifigkeit auffedern. Beim Ausrücken der Kupplungsvorrichtung wird die Tellerfeder in die entgegengesetzte Richtung betätigt. Dadurch wird zunächst die auf den Kupplungsdeckel wirkende Axialkraft abgebaut, wodurch der Kupplungsdeckel in seine kraftfreie Lage einfedert. Dabei bewegt sich das durch den Drahtring ausgebildete Telleifederlager an der Kupplungsdeckelauflage in axialer Richtung mit, wobei der Ausrückweg solange nicht in Abhub übersetzt werden kann, bis der Kupplungsdeckel seine kraftfreie Lage eingenommen hat. Beim weiteren Ausrücken stützt sich die Tellerfeder vorzugsweise an einer anpressplattenseitigen Stützfeder ab, die in axialer Richtung steif mit dem Kupplungsdeckel verbunden ist und die ebenfalls ein Teil der verschwenkbaren Lagerung der Tellerfeder darstellt. Durch die steife Anbindung der Stützfeder am Kupplungsdeckel bewirkt die Ausrückkraft ein weiteres Einfedern des Kupplungsdeckels, wobei dieser weitere Federweg ebenfalls nicht in Abhub der Anpressplatte übersetzt werden kann. Gemäß der Lehre des Patentanspruchs 1 nimmt die Steifigkeit des Kupplungsdeckels zu, wenn die verschwenkbare Lagerung, insbesondere die Drahtringauflage, zur Übersetzungssteigerung radial weiter außen liegt. Die höhere Deckelsteifigkeit bedingt eine geringere Verformung des Kupplungsdeckels, wodurch der Kupplungsdeckel insgesamt dünnwandiger, d.h. weniger steif, und damit auch kostengünstiger ausgebildet sein kann.

Die wegbezogene Optimierung des gesamten Kupplungssystems mit der Steigerung des Übersetzungsverhältnisses der Kupplungsvorrichtung bzw. der Druckplattenbaugruppe hat ebenfalls Auswirkungen auf die Betätigungsvorrichtung, die nachfolgend vorzugsweise als fluidische Betätigungsvorrichtung zum Ein- und/oder Ausrücken der Kupplungsvorrichtung ausgebildet ist.

- Fluidische Verluste durch Verformung an Dichtungen und Leitungen: Beim Betätigen der Kupplungsvorrichtung stellt sich in der fluidischen Betätigungsvorrichtung ein Druck ein, der von der anliegenden Ausrückkraft sowie der Fläche des Nehmerkolbens im Nehmerzylinder abhängig ist. Beim Ausrücken wird ein Fluidvolumen vom Geberzylinder über eine Fluidleitung in den Nehmerzylinder verschoben. Aus dem Flächenverhältnis von Nehmerkolben zu Geberkolben ergibt sich das Übersetzungsverhältnis der Kupplungshydraulik iH. Infolge des herrschenden Drucks kommt es abhängig von der Steifigkeit der jeweiligen Komponenten zu Verformungen in den Dichtungen und Fluidleitungen. Mit diesen Verformungen geht eine Volumenzunahme einher, die durch das vom Geberzylinder verschobene Fluidvolumen gefüllt wird. Somit kommt nur ein Teil des vom Geberzylinder verschobenen Fluidvolumens im Nehmerzylinder an und kann dort zur Betätigung der Kupplungsvorrichtung benutzt werden. Im Vergleich zu einem ideal steifen fluidischen Betätigungssystem bleibt also ein Teil des möglichen Hubs des Geberzylinders durch die druckabhängigen Verlustvolumina ungenutzt. Durch geringere druckabhängige Verlustvolumina und/oder eine geringere Ausrückkraft und/oder eine größere Fläche des Nehmerzylinders lassen sich diese Wegverluste reduzieren. Die Begriffe Fluid und Hydraulik umfassen dabei nicht nur Flüssigkeiten, sondern auch Gase, insbesondere Luft. Gleiche Überlegungen gelten für semifluidische Betätigungsvorrichtungen ebenso wie für die Steifigkeiten in rein mechanischen Betätigungsvorrichtungen.

- Steifigkeit des Kupplungspedals: Das Kupplungspedal wirkt als Hebel und wandelt die Betätigungsenergie des Fahrerfußes in die Betätigungsenergie am Geberzylinder um. Aufgrund seiner begrenzten Steifigkeit federt das mit Kraft beaufschlagte Kupplungspedal um einen Weg ein, der nicht in einen Hub des Geberzylinders umgesetzt werden kann und folglich nicht für die Betätigung der Kupplungsvorrichtung zur Verfügung steht. Ein geringerer Wegverlust am Kupplungspedal kann durch ein steiferes Kupplungspedal und/oder eine geringere Pedalkraft erzielt werden. Insbesondere führt die Steigerung des Übersetzungsverhältnisses der Druckplattenbaugruppe zu einer Verringerung der Pedalkraft und damit zu einem geringeren Wegverlust des Kupplungspedals.

Bevorzugte Ausführungsbeispiele der vorliegenden Erfindung sind in den abhängigen Ansprüchen dargelegt.

Vorzugsweise ist der Kupplungsdeckel aus einem Blechmaterial mit einer Materialdicke d <= 5 mm hergestellt. Hierdurch kann der Kupplungsdeckel und mit ihm das gesamte Kupplungssystem besonders kosttengünstig hergestellt werden.

Vorzugsweise gilt für das Übersetzungsverhältnis der Druckbarplattenbaugruppe: 5,5 <= iDP <= 6,5. Bei diesem Übersetzungsverhältnis treten besonders geringe Wegverluste auf, ohne dass es zu einem übermäßigen Anstieg des benötigten Bauraums kommt.

Weiterhin ist es von Vorteil, wenn für die Materialdicke gilt: 3 mm <= d <= 4,5 mm. Insbesondere ist es von Vorteil, wenn für die Materialdicke gilt: 3 mm <= d <= 4 mm. Hierdurch ist es möglich, durch den verringerten Materialeinsatz für den Kupplungsdeckel eine besonders kostengünstige Kupplungsvorrichtung zu bauen.

Gemäß einem weiteren bevorzugten Ausführungsbeispiel ist die Tellerfeder im Bereich des Schwenkradius verschwenkbar am Kupplungsdeckel gelagert.

Dabei ist es von Vorteil, wenn die verschwenkbare Lagerung am Kupplungsdeckel zumindest einen Drahtring und/oder zumindest eine Stützfeder umfasst, mit dem/mit der sich die Tellerfeder kupplungsdeckelseitig und/oder anpressplattenseitig in Anlage befindet.

Weiterhin ist es von Vorteil, wenn die verschwenkbare Lagerung kupplungsdeckelseitige Haken und/oder Bolzen umfasst, durch die die Tellerfeder mittelbar oder unmittelbar am Kupplungsdeckel verschwenkbar befestigt ist. Diese Art der Lagerung ermöglicht besonders geringe Wegverluste.

Weiterhin ist es von Vorteil, wenndie Betätigungsvorrichtung zumindest ein Kupplungspedal mit einem Übersetzungsverhältnis 3,5 <= iP <= 5,5 aufweist. Hierdurch lassen sich, bezogen auf den Wirkungsgrad des gesamten Kupplungssystems, die Wegverluste aufgrund der begrenzten Steifigkeit des Kupplungspedals minimieren.

Insbesondere ist es von Vorteil, wenn das Kupplungspedal mit einer Übertotpunktfeder ausgestattet ist, die die maximale Pedalkraft am Kupplungspedal um 30 N bis 50 N, vorzugsweise um 35 N bis 45 N, verringert. Hierdurch verringern sich die Betätigungskräfte, die der Fahrer des Kraftfahrzeugs auf das Kupplungspedal ausüben muss, um die Kupplungsvorrichtung auszurücken. Gleichzeitig ermöglicht die Übertotpunktfeder die Optimierung der Wegverluste im Kupplungssystem.

Weiterhin ist es von Vorteil, wenn das Kupplungspedal einen maximalen Pedalweg von 120 mm bis 160 mm, vorzugsweise von 130 mm bis 150 mm, aufweist. Bezogen auf das Kupplungssystem kann somit der Wirkungsgrad des gesamten Kupplungssystems optimiert werden, ohne dass sich für den Fahrer Unterschiede zur gewohnten Betätigung ergeben.

Da aufgrund der Schlupfdrehzahl beim Aufbau des Reibschlusses sowohl die Reibbeläge der Kupplungsscheibe als auch in geringerem Maße die Reibflächen der Gegendruckplatte und der Anpressplatte einem Verschleiß unterworfen sind, kann die Kupplungsvorrichtung vorzugsweise mit einer Verschleißnachstelleinrichtung versehen sein. Bei der Verschleißnachstelleinrichtung handelt es sich vorzugsweise um eine wegbasierte Verschleißnachstelleinrichtung. Die Verschleißnachstelleinrichtung weist vorzugsweise einen Verstellring auf, der in axialer Richtung zwischen der Anpressplatte und der Tellerfeder, insbesondere dem Kraftrand der Tellerfeder, klemmbar gelagert ist. Auf seiner der Tellerfeder abgewandten Oberfläche weist der Verstellring Rampen auf, die gleitbeweglich auf Gegenrampen angeordnet sind, die vorzugsweise in die Anpressplatte eingelassen sind, sodass bei einer relativen Verdrehung des Verstellrings die Rampen des Verstellrings an den Gegenrampen entlanggleiten, wodurch sich der Abstand zwischen der Anpressplatte und der der Anpressplatte abgewandten Oberfläche des Verstellrings, mit dem der Verstellring in Anlage an der Tellerfeder ist, verändert.

Der Antrieb des Verstellrings erfolgt vorzugsweise durch einen Spindeltrieb, der durch eine Antriebsklinke angetrieben werden kann. Ist der noch nicht nachgestellte Kupplungsverschleiß hinreichend groß, überspringt beim Einrücken der Kupplungsvorrichtung die Zunge der Antriebsklinke einen Zahn eines Antriebsritzels des Spindeltriebs, wodurch der Kupplungsverschleiß sensiert wird, und rastet beim anschließenden Ausrücken der Kupplungsvorrichtung in den nachfolgenden Zahngrund des Antriebsritzels ein, wobei im Zuge des weiteren Ausrückvorgangs das Antriebsritzel und damit der gesamte Spindeltrieb durch die Antriebsklinke verdreht wird. Diese Drehbewegung wird vom Spindeltrieb auf den Verstellring übertragen, der dadurch seinerseits verdreht wird, um den zuvor durch die Antriebsklinke sensierten Kupplungsverschleiß nachzustellen.

Die vorliegende Erfindung wird nachfolgend anhand von bevorzugten Ausführungsbeispielen in Verbindung mit den zugehörigen Figuren näher erläutert. In diesen zeigen:

Figur 1 eine Schnittansicht eines Ausführungsbeispiels eines Kupplungssystems mit einer Kupplungsvorrichtung und einer Betätigungsvorrichtung, und

Figur 2 eine Detailansicht der Kupplungsvorrichtung aus Figur 1.

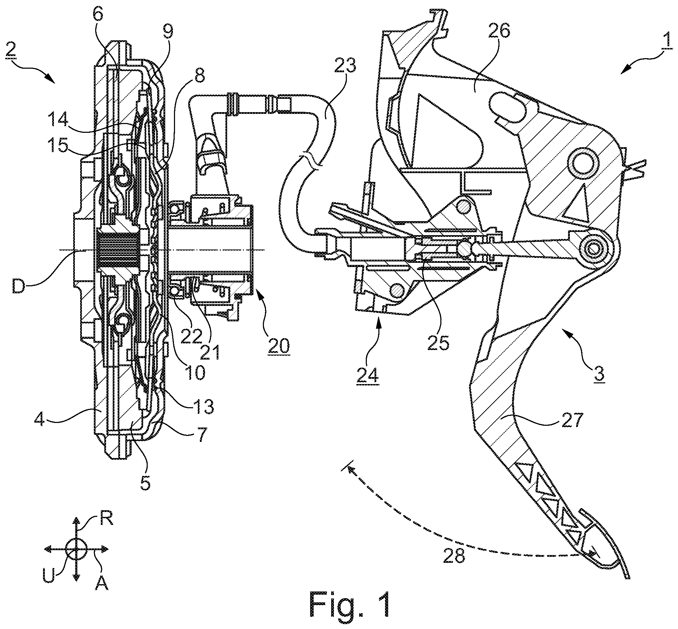

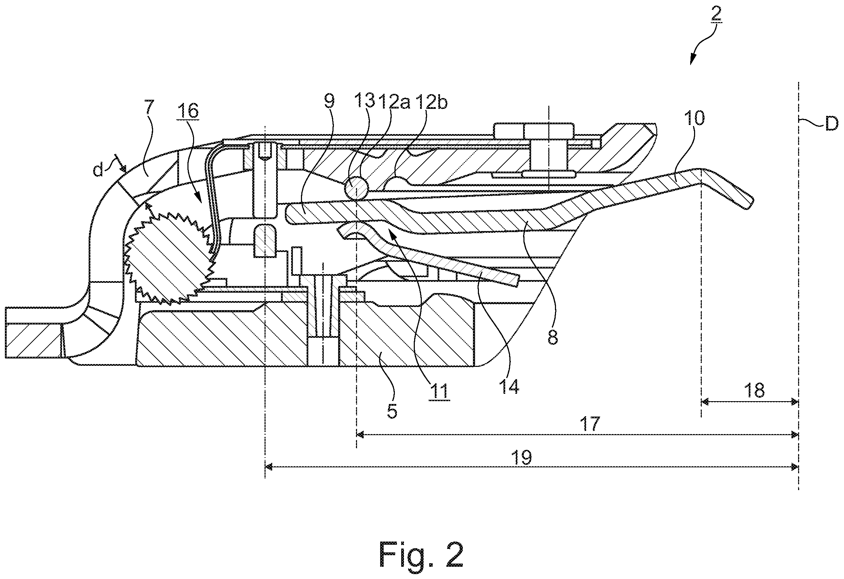

Die Figuren 1 und 2 betreffen ein bevorzugtes Ausführungsbeispiel eines Kupplungssystems 1 für ein Kraftfahrzeug, wobei das Kupplungssystem 1 eine Kupplungsvorrichtung 2 und eine Betätigungsvorrichtung 3 aufweist. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele des Kupplungssystems 1 in seiner Gesamtheit, der Kupplungsvorrichtung 2 oder der Betätigungsvorrichtung 3, die Teilkombinationen der im Folgenden zu erläuternden Merkmale aufweisen.

Die in Figur 2 im Detail dargestellte Kupplungsvorrichtung 2 ist Teil des in Figur 1 dargestellten Kupplungssystems 1. Die Kupplungsvorrichtung 2 ist drehbar um eine Drehachse D gelagert und weist zumindest eine Anpressplatte 5, zumindest eine Gegendruckplatte 4 und zumindest eine in axialer Richtung A der Kupplungsvorrichtung 2 zwischen der Anpressplatte 5 und der Gegendruckplatte 4 angeordnete Kupplungsscheibe 6 auf. Die Gegendruckplatte 4 ist mit einem Kupplungsgehäuse, insbesondere einem Kupplungsdeckel 7, fest verbunden, insbesondere verschraubt. Die Anpressplatte 5 ist im Kupplungsdeckel 7 drehfest gelagert und in axialer Richtung A der Kupplungsvorrichtung 2 begrenzt verlagerbar. Insbesondere ist die Anpressplatte 5 mittels mehrerer nicht dargestellter, in Umfangsrichtung U der Kupplungsvorrichtrung 2 voneinander beabstandeter Blattfedern drehfest am Kupplungsdeckel 7 befestigt und von der Gegendruckplatte 4 weg, d.h. mit Bezug auf Figur 1 nach rechts, vorgespannt.

Darüber hinaus weist die Kupplungsvorrichtung 2 eine Tellerfeder 8 auf, die gehäuseseitig bzw. kupplungsdeckelseitig abgestützt ist und durch die Betätigungsvorrichtung 3 betätigbar ist. Die kupplungsdeckelseitige Abstützung kann beispielsweise durch eine am Kupplungsdeckel 7 befestigte, verschwenkbare Lagerung 11 erfolgen, durch die die Tellerfeder 8 verkippbar aufgehängt ist.

Über Tellerfederzungen 10, die in radialer Richtung R der Kupplungsvorrichtung 2 auf der Innenseite der im Wesentlichen ringförmig ausgebildeten Tellerfeder 8 angeordnet sind, ist die Tellerfeder 8 durch die Betätigungsvorrichtung 3 betätigbar. In ihrem radialen Außenbereich weist die Tellerfeder 8 einen Kraftrand 9 auf. Der Kraftrand 9 kann über Anpressplattennocken unmittelbar auf die Anpressplatte 5 wirken, kann jedoch auch, wie dies in den Figuren 1 und 2 dargestellt ist, über einen Verstellring, der einer, vorzugsweise wegbasierten, Verschleißnachstelleinrichtung 16 zuzuordnen ist, mittelbar auf die Anpressplatte 5 wirken.

Bei der normal-eingerückten, in den Figuren 1 und 2 dargestellten Kupplungsvorrichtung 2 überwiegt im betätigungsfreien Zustand die wirksame Kraft der Tellerfeder 8 die Gegenkraft der Blattfedern, während bei einer normal-ausgerückten Kupplungsvorrichtung 2 im betätigungsfreien Zustand die Gegenkraft der Blattfedern die wirksame Kraft der Tellerfeder 8 überwiegt. Dementsprechend führt eine Betätigung der Tellerfeder 8 der normal-eingerückten Kupplungsvorrichtung 2 zum Ausrücken der Kupplungsvorrichtung 2 durch Verkippen bzw. Verschwenken der Tellerfeder 8, d.h. zum Abhub der Anpressplatte 5 und zur Entfernung der Anpressplatte 5 von der Gegendruckplatte 4, während eine Betätigung der Tellerfeder 8 bei einer normal-ausgerückten Kupplungsvorrichtung 2 zum Einrücken der Kupplungsvorrichtung 2 durch Verkippen bzw. Verschwenken der Tellerfeder 8 führt.

Bei eingerückter Kupplungsvorrichtung 2 wird ein Drehmoment von der Eingangsseite der Kupplungsvorrichtung 2, beispielsweise von einem Zweimassenschwungrad, über das Kupplungsgehäuse bzw. den Kupplungsdeckel 7, und sowohl von der Gegendruckplatte 4 als auch von der Anpressplatte 5, die beide mit dem Kupplungsgehäuse bzw. den Kupplungsdeckel 7 drehfest verbunden sind, reibschlüssig auf die Kupplungsscheibe 6 übertragen. Von der Kupplungsscheibe 6, die reibschlüssig zwischen der Gegendruckplatte 4 und der Anpressplatte 5 geklemmt ist, wird das Drehmoment zur Ausgangsseite der Kupplungsvorrichtung 2 übertragen, beispielsweise auf eine Eingangswelle eines Getriebes.

Da aufgrund der Schlupfdrehzahl beim Aufbau des Reibschlusses sowohl die Reibbeläge der Kupplungsscheibe 6 als auch in geringerem Maße die Reibflächen der Gegendruckplatte 4 und der Anpressplatte 5 einem Verschleiß unterworfen sind, muss über die Lebensdauer der Kupplungsvorrichtung 2 die Anpressplatte 5 immer näher an die Gegendruckplatte 4 heranbewegt werden, um die Abnahme der Dicke der Reibbeläge und der Stärke der Reibflächen in axialer Richtung A zu kompensieren und den Reibschluss herstellen bzw. die Kupplungsvorrichtung 2 einrücken zu können. Dadurch würde sich die Einbaulage der Tellerfeder 8 ändern. Um dies zu kompensieren und somit die Einbaulage der Tellerfeder 8 konstant zu halten, ist in der Kupplungsvorrichtung 2 die bereits zuvor erwähnte Verschleißnachstelleinrichtung 16 vorzugsweise ausgebildet.

Zusätzlich zum zuvor erwähnten Verstellring weist die Verschleißnachstelleinrichtung 16 einen Spindeltrieb auf, auf den bzw. auf dessen Spindelwelle ein Antriebsritzel drehfest angeordnet ist. Der gesamte Spindeltrieb ist durch zumindest eine Spindellagereinrichtung drehbar aufseiten der Anpressplatte 5 gelagert, wobei die Spindellagereinrichtung beispielsweise mit einer der Kupplungsscheibe 6 abgewandten Seite der Anpressplatte 5 verbunden, insbesondere verschraubt oder vernietet, ist.

Über eine Spindelmutter ist der Spindeltrieb mit dem Verstellring verbunden, wobei eine Drehbewegung des Spindeltriebs in eine translatorische Bewegung der Spindelmutter umgesetzt wird und die translatorische Bewegung der Spindelmutter in eine Drehbewegung des Verstellrings umgesetzt wird. Vorzugsweise ist der Verstellring als Rampenring ausgebildet. Rampen des Verstellrings sind gleitbeweglich auf Gegenrampen angeordnet, die auf der der Kupplungsscheibe abgewandten Seite der Anpressplatte 5 ausgebildet sind, vorzugsweise in die Anpressplatte 5 eingelassen sind.

Das Antriebsritzel ist auf seiner Mantelfläche mit einer Zahnstruktur versehen, die eine bestimmte Teilung bzw. Zahnweite aufweist. Das Antriebsritzel weist in Querrichtung der Kupplungsvorrichtung 2 einander gegenüberliegende Seitenflächen bzw. Stirnflächen auf, die das Antriebsritzel in Querrichtung begrenzen.

Ein freies Ende einer Antriebsklinke der Verschleißnachstelleinrichtung 16 ist ausgebildet, um im Wesentlichen formschlüssig in die Zahnstruktur des Antriebsritzels eingreifen zu können. Beispielsweise weist die Antriebsklinke eine, zwei oder mehr als zwei sich im Wesentlichen in axialer Richtung A der Kupplungsvorrichtung 2 in Richtung des Antriebsritzels erstreckende Klinkenzungen auf, die ausgebildet sind, um mit der Zahnstruktur des Antriebsritzels, vorzugsweise abwechselnd, in formschlüssigen Eingriff gelangen zu können. Wenn zumindest zwei Klinkenzungen vorhanden sind, weisen die Klinkenzungen vorzugsweise einen Längenunterschied auf, der geringer als die Teilung der Zahnstruktur des Antriebsritzels ist. Vorzugsweise ist die jeweilige Klinkenzunge in radialer Richtung R der Kupplungsvorrichtung 2 gegen das Antriebsritzel vorgespannt, sodass der Eingriff zusätzlich auch einen kraftschlüssigen Anteil aufweisen kann.

Alternativ oder zusätzlich ist die Antriebsklinke in axialer Richtung A der Kupplungsvorrichtung 2 gegen das Antriebsritzel vorgespannt. Hierzu weist die Antriebsklinke vorzugsweise einen Federabschnitt auf, der in die Klinkenzunge bzw. in die Klinkenzungen übergeht. Der Federabschnitt der Antriebsklinke erstreckt sich vorzugsweise im Wesentlichen in radialer Richtung R der Kupplungsvorrichtung 2 und ist mit dem Kupplungsgehäuse, insbesondere dem Kupplungsdeckel 7, verbunden, beispielsweise verschraubt oder vernietet. Beispielsweise ist der Federabschnitt auf der Außenseite des Kupplungsdeckels 7 angeordnet, sodass sich die Klinkenzunge durch eine Aussparung im Kupplungsdeckel 7 nach innen zum Antriebsritzel erstreckt. Jedoch ist es auch möglich, dass der Federabschnitt auf der Innenseite des Kupplungsdeckels 7 angeordnet ist.

Die elastische Vorspannung des Federabschnitts gegen den Kupplungsdeckel 7 bzw. in axialer Richtung A der Kupplungsvorrichtung 2 kann durch ein Vorspannblech unterstützt werden. Über einen Anschlag, der beispielsweise mit dem Kraftrand 9 der Tellerfeder 8 oder mit der tellerfederseitigen Oberfläche des Verstellrings in Anlage bringbar ist bzw. sich in Anlage befindet, kann das Vorspannblech vom Federabschnitt abgehoben werden, um bei Axialschwingungen der Anpressplatte 5 im ausgerückten Zustand der Kupplungsvorrichtung 2 eine ungewollte Verschleißnachstellung und/oder eine Beschädigung der Verschleißnachstelleinrichtung 16, insbesondere der Klinkenzunge bei blockiertem Spindeltrieb, zu verhindern. Insbesondere kann durch den Anschlag der mögliche Relativweg zwischen der Antriebsklinke und dem Antriebsritzel des Spindeltriebs begrenzt werden.

Wird die Kupplungsvorrichtung 2 eingerückt, bewegt sich die Anpressplatte 5 auf die Gegendruckplatte 4 zu, d.h. mit Bezug auf Figur 1 nach links. Hierbei gleitet das freie Ende der Klinkenzunge der Antriebsklinke bzw. gleiten die freien Enden der Klinkenzungen der Antriebsklinke über eine Zahnflanke der Zahnstruktur des Antriebsritzels. Liegt ein hinreichender Kupplungsverschleiß vor, muss sich die Anpressplatte 5 weiter auf die Gegendruckplatte 4 zubewegen, sodass schließlich ein freies Ende zumindest einer Klinkenzunge, die auf die Zahnflanke folgende Zahnspitze überspringt.

Beim anschließenden Ausrücken der Kupplungsvorrichtung 2 rastet das freie Ende der besagten Klinkenzunge in den der überspringenden Zahnspitze folgenden Zahngrund ein. Während der Ausrückbewegung, d.h. während die Anpressplatte 5 sich unter Vorspannung der Blattfedern mit Bezug auf Figur 1 nach rechts bewegt und der Verstellring mit einer hinreichend geringen Klemmkraft beaufschlagt ist, treibt die Antriebsklinke das Antriebsritzel in einer ersten Drehrichtung, mit Bezug auf Figur 2 im Uhrzeigersinn, an. Mit dem Antriebsritzel dreht sich der gesamte Spindeltrieb, der die Drehbewegung in eine translatorische Bewegung der Spindelmutter umsetzt. Durch die translatorisch bewegte Spindelmutter wird der beim Ausrücken mit einer hinreichend geringen Klemmkraft beaufschlagte Verstellring gedreht, sodass sich die Rampen des Verstellrings an den in die Anpressplatte 5 eingelassenen Gegenrampen hochbewegen. Hierdurch vergrößert sich der Abstand zwischen der tellerfederseitigen Oberfläche des Verstellrings und der Anpressplatte 5 soweit, bis der Kupplungsverschleiß, bezogen auf die Tellerfeder 8, wegmäßig kompensiert worden ist.

Während der Betätigung der Kupplungsvorrichtung 2 durch die Betätigungsvorrichtung 3 besteht die Möglichkeit, dass die Antriebsklinke das Antriebsritzel der Verschleißnachstelleinrichtung 16 in die falsche Richtung dreht, d.h. entgegen des eigentlich zu kompensierenden Kupplungsverschleißes. Unter anderem kann diese Problematik durch Axialschwingungen der Anpressplatte 5 bei ausgerückter Kupplungsvorrichtung 2 oder während des Einrückens auftreten, beispielsweise wenn die Klinkenzunge in radialer Richtung R der Kupplungsvorrichtung 2 zu stark gegen das Antriebsritzel vorgespannt ist. Daher weist die Verschleißnachstelleinrichtung 16 vorzugsweise zumindest eine Sperrklinke auf, die ausgebildet und angeordnet ist, das Antriebsritzel gegen eine Rückdrehung, d.h. gegen eine Verdrehung entgegen der ersten Drehrichtung, zu sperren.

Im dargestellten Ausführungsbeispiel ist die verschwenkbare Lagerung 11 der Tellerfeder 8 durch einen kupplungsdeckelseitigen Drahtring 13 und eine anpressplattenseitige Stützfeder 14 realisiert. Somit ist die Tellerfeder 8 im Bereich ihres Schwenkradius 17 verschwenkbar am Kupplungsdeckel 7 gelagert.

Die anpressplattenseitige Stützfeder 14 ist in axialer Richtung A der Kupplungsvorrichtung 2 beispielsweise durch Setzköpfe von Tellerfederzentrierbolzen 15 gehalten und in Richtung des Kupplungsdeckels 7 gegen die Tellerfeder 8 vorgespannt. Gleichzeitig kann durch die Tellerfederzentrierbolzen 15 auch eine Verdrehsicherung der Stützfeder 14 in Umfangsrichtung U der Kupplungsvorrichtung 2 erfolgen. Somit umfasst die verschwenkbare Lagerung 11 am Kupplungsdeckel 7 zumindest einen Drahtring 13 und/oder zumindest eine Stützfeder 14, mit dem/mit der sich die Tellerfeder 8 kupplungsdeckelseitig und/oder anpressplattenseitig in Anlage befindet. Die verschwenkbare Lagerung 11 umfasst ferner kupplungsdeckelseitige Haken und/oder Bolzen, insbesondere Tellerfederzentrierbolzen 15, durch die die Tellerfeder 8 mittelbar oder unmittelbar am Kupplungsdeckel 7 verschwenkbar befestigt ist.

Anstelle der Stützfeder 14 ist es beispielsweise jedoch auch möglich, einen zweiten, anpressplattenseitigen Drahtring zur Ausbildung der verschwenkbaren Lagerung 11 der Tellerfeder 8 einzusetzen. Auch kann gänzlich auf den Einsatz von Drahtringen verzichtet werden, beispielsweise wenn die Tellerfederzentrierbolzen 15 oder andere kupplungsdeckelseitige Abschnitte mit entsprechenden Nockenabschnitten versehen sind, durch die die Tellerfeder 8 unmittelbar verschwenkbar gelagert sein kann.

Kupplungsdeckelseitig sind im dargestellten Ausführungsbeispiel zwei konzentrische Aufnahmesicken 12a, 12b dargestellt, in denen wahlweise ein Drahtring 13 des jeweils entsprechenden Durchmessers vorgesehen sein kann. Im dargestellten Ausführungsbeispiel ist der Drahtring 13 in der in radialer Richtung R der Kupplungsvorrichtung 2 äußeren, ersten Aufnahmesicke 12a gelagert. Hierdurch ist generell ein größeres Übersetzungsverhältnis der Druckplattenbaugruppe iDP möglich, als wenn der Drahtring 13 in der in radialer Richtung R der Kupplungsvorrichtung 2 weiter innen angeordneten, zweiten Aufnahmesicke 12b angeordnet wäre. Die Verwendung von zwei konzentrisch angeordneten, ringförmigen Aufnahmesicken 12a, 12b dient daher nur der besseren Erläuterung der technischen Lehre der vorliegenden Anmeldung. So ist der prinzipielle Aufbau der verschwenkbaren Lagerung 11 der Tellerfeder 8 auch mit nur einer einzigen Aufnahmesicke für einen Drahtring 13 oder mit einem anderen, kupplungsdeckelseitigen, einen Abwälzabschnitt aufweisenden Bauteil oder Abschnitt möglich.

Generell ist das Übersetzungsverhältnis der Druckplattengruppe iDP bzw. das Übersetzungsverhältnis der Kupplungsvorrichtung 2 definiert als:

$$iDP = (Schwenkradius - Betätigungsradius) / (Wirkradius - Schwenkradius)$$

Der Schwenkradius 17 definiert den Abstand vom durch die verschwenkbare Lagerung 11 der Tellerfeder 8 definierten Schwenkpunkt zur Drehachse D der Kupplungsvorrichtung 2. Der Betätigungsradius 18 definiert den Abstand vom Auflagepunkt der Betätigungsvorrichtung 3, üblicherweise einem Ausrücklager 22 der Betätigungsvorrichtung 3, an der Tellerfeder 8, genauer gesagt an den Tellerfederzungen 10, zur Drehachse D der Kupplungsvorrichtung 2. Der Wirkradius 19 definiert den Abstand vom Auflagepunkt der Tellerfeder 8, genauer gesagt vom Auflagepunkt des Kraftrands 9 der Tellerfeder 8, auf der Anpressplatte 5, üblicherweise den Anpressplattennocken oder dem Verstellring einer anpressplattenseitigen Verschleißnachstelleinrichtung 16, zur Drehachse D der Kupplungsvorrichtung 2.

Die Tellerfeder 8 wirkt auf dem in radialer Richtung R der Kupplungsvorrichtung 2 außerhalb des Schwenkradius 17 angeordneten Wirkradius 19 auf die Anpressplatte 5. Ferner ist die Tellerfeder 8 auf dem in radialer Richtung R innerhalb des Schwenkradius 17 angeordneten Betätigungsradius 18 durch die Betätigungsvorrichtung 3, genauer gesagt das Ausrücklager 22 der Betätigungsvorrichtung 3, betätigbar. Erfindungsgemäß ist das Übersetzungsverhältnis der Druckplattenbaugruppe iDP >= 5 (größer/gleich 5) und liegt insbesondere vorzugsweise bei 5,5 <= iDP <= 6,5 (5,5 kleiner/gleich iDP kleiner/gleich 6,5).

Der Kupplungsdeckel 7 ist vorzugsweise aus einem Blechmaterial mit einer Materialdicke d <= 5 mm (kleiner/gleich 5 mm) hergestellt. Besonders vorzugsweise gilt für die Materialdicke 3 mm <= d <= 4,5 mm (3 mm kleiner/gleich d kleiner/gleich 4,5 mm), insbesondere vorzugsweise 3 mm <= d <= 4 mm, wodurch der Kupplungsdeckel 7 und die gesamte Kupplungsvorrichtung 2 besonders kostengünstig hergestellt werden kann.

Zusätzlich zur Kupplungsvorrichtung 2 weist das Kupplungssystem 1 die Betätigungsvorrichtung 3 auf. Die Betätigungsvorrichtung 3 ist vorzugsweise als fluidische Betätigungsvorrichtung, insbesondere als hydraulische oder semihydraulische Betätigungsvorrichtung 3, ausgebildet. Aufseiten der Kupplungsvorrichtung 2 weist die Betätigungsvorrichtung 3 einen Nehmerzylinder 20 auf, in dem ein Nehmerkolben 21 begrenzt verlagerbar angeordnet ist. Der Nehmerzylinder 20 ist über eine Fluidleitung 23 mit einem Geberzylinder 24 der Betätigungsvorrichtung 3 verbunden. Im Geberzylinder 24 ist ein Geberkolben 25 begrenzt verlagerbar angeordnet, wobei eine Verlagerung des Geberkolbens 25 über die Fluidleitung 23 und das darin verschobene Fluid eine Verlagerung des Nehmerkolbens 21 bewirkt. Der Nehmerkolben 21 wirkt seinerseits auf das Ausrücklager 22, um die Kupplungsvorrichtung 2 über die Tellerfederzungen 10 auszurücken bzw. einzurücken.

Aufseiten der Betätigungsvorrichtung 3 ist ein Kupplungspedal 27 drehbar an einem Pedalbock 26 gelagert. Der Pedalbock 26 ist üblicherweise im Fußraum des Kraftfahrzeugs angeordnet. Zwischen einer Ausgangsposition und einer maximal komprimierten Position kann das Kupplungspedal 27 einen maximalen Pedalweg 28 zurücklegen, wobei der maximale Pedalweg 28 einen Teil einer Kreisbahn beschreibt. Vorzugsweise ist das Kupplungspedal 27 mit einer Übertotpunktfeder ausgestattet, um die maximale Pedalkraft, die der Fahrer des Kraftfahrzeugs mit seinem Fuß aufbringen muss, um die Kupplungsvorrichtung 2 auszurücken, zu verringern.

Generell ist das Übersetzungsverhältnis der Kupplungshydraulik iH definiert als:
iH = (Fläche Nehmerkolben) / (Fläche Geberkolben). Erfindungsgemäß gilt 1,5 <= iH <= 3,5 (1,5 kleiner/gleich iH kleiner/gleich 3,5).

Gemäß einem weiteren bevorzugten Ausführungsbeispiel weist das Kupplungspedal 27 der Betätigungsvorrichtung 3 ein Übersetzungsverhältnis iP auf, wobei 3,5 <= iP <= 5,5 gilt. Bei einem maximalen Pedalweg 28 von 120 mm übersetzt das Kupplungspedal 27 bei einem Übersetzungsverhältnis von iP = 3,5 den Pedalweg 28 auf ca. 34 mm Weg des Geberkolbens 25 herunter. Bei einem maximalen Pedalweg 28 von 120 mm übersetzt das Kupplungspedal 27 bei einem Übersetzungsverhältnis von iP = 5,5 den Pedalweg 28 auf ca. 22 mm Weg des Geberkolbens 25 herunter. Bei einem maximalen Pedalweg 28 von 160 mm übersetzt das Kupplungspedal 27 bei einem Übersetzungsverhältnis iP = 3,5 den Pedalweg 28 auf ca. 46 mm Weg des Geberkolbens 25 herunter. Bei einem maximalen Pedalweg 28 von 160 mm übersetzt das Kupplungspedal 27 bei einem Übersetzungsverhältnis iP = 5,5 den Pedalweg 28 auf ca. 29 mm Weg des Geberkolbens 25 herunter.

Das Kupplungspedal 27 weist dabei vorzugsweise einen maximalen Pedalweg 28 von 120 mm bis 160 mm, insbesondere vorzugsweise von 130 mm bis 150 mm, auf. Gemäß einem weiteren bevorzugten Ausführungsbeispiel ist das Kupplungspedal 27 mit einer Übertotpunktfeder ausgestattet, die die maximale Pedalkraft am Kupplungspedal 27 um 20 % bis 40 %, vorzugsweise um 25% bis 35%, verringert. Insbesondere wird die maximale Pedalkraft am Kupplungspedal 27 in absoluten Zahlen um 30 N bis 50 N, vorzugsweise um 35 N bis 45 N, verringert.

Die vorangegangenen Ausführungsbeispiele betreffen ein Kupplungssystem 1 mit einer Kupplungsvorrichtung 2 und einer fluidischen Betätigungsvorrichtung 3 zum Ein- und/oder Ausrücken der Kupplungsvorrichtung 2, wobei die Kupplungsvorrichtung 2 zumindest eine Gegendruckplatte 4, zumindest einen Kupplungsdeckel 7 mit zumindest einer auf einem Schwenkradius 17 verschwenkbar gelagerten Tellerfeder 8, und zumindest eine in axialer Richtung A der Kupplungsvorrichtung 2 durch die Tellerfeder 8 begrenzt verlagerbaren Anpressplatte 5 zur reibschlüssigen Klemmung einer Kupplungsscheibe 6 zwischen der Anpressplatte 5 und der Gegendruckplatte 4 aufweist, wobei die Tellerfeder 8 auf einem in radialer Richtung R der Kupplungsvorrichtung 2 außerhalb des Schwenkradius 17 angeordneten Wirkradius 19 auf die Anpressplatte 5 wirkt und auf einem in radialer Richtung R innerhalb des Schwenkradius 17 angeordneten Betätigungsradius 18 durch die Betätigungsvorrichtung 3 betätigbar ist, wobei gilt: iDP = (Schwenkradius - Betätigungsradius) / (Wirkradius - Schwenkradius) >= 5, und wobei die fluidische Betätigungsvorrichtung 3 zumindest einen mittelbar oder unmittelbar auf die Tellerfeder 8 wirkenden Nehmerzylinder 20 mit einem Nehmerkolben 21 und zumindest einen fluidisch mit dem Nehmerzylinder 20 verbundenen Geberzylinder 24 mit einem Geberkolben (25) aufweist, wobei bezüglich der Kolbenflächen gilt: iH = (Fläche Nehmerkolben) / (Fläche Geberkolben), wobei 1,5 <= iH <= 3,5.

**Bezugszeichenliste**

1 Kupplungssystem
2 Kupplungsvorrichtung
3 Betätigungsvorrichtung
4 Gegendruckplatte
5 Anpressplatte
6 Kupplungsscheibe
7 Kupplungsdeckel
8 Tellerfeder
9 Kraftrand
10 Tellerfederzunge
11 verschwenkbare Lagerung
12a erste Aufnahmesicke
12b zweite Aufnahmesicke
13 Drahtring
14 Stützfeder
15 Tellerfederzentrierbolzen
16 Verschleißnachstelleinrichtung
17 Schwenkradius
18 Betätigungsradius
19 Wirkradius
20 Nehmerzylinder
21 Nehmerkolben
22 Ausrücklager
23 Fluidleitung
24 Geberzylinder
25 Geberkolben
26 Pedalbock
27 Kupplungspedal
28 Pedalweg
d Materialdicke der Wandung des Kupplungsdeckels

iDP      Übersetzungsverhältnis der Druckplattenbaugruppe
iH      Übersetzungsverhältnis der Kupplungshydraulik
iP      Übersetzungsverhältnis des Kupplungspedals
A      axiale Richtung
D      Drehachse
R      radiale Richtung
U      Umfangsrichtung

**Patentansprüche**

1. Kupplungssystem (1) mit einer Kupplungsvorrichtung (2) und einer fluidischen Betätigungsvorrichtung (3) zum Ein- und/oder Ausrücken der Kupplungsvorrichtung (2), wobei die Kupplungsvorrichtung (2) zumindest eine Gegendruckplatte (4), zumindest einen Kupplungsdeckel (7) mit zumindest einer auf einem Schwenkradius (17) verschwenkbar gelagerten Tellerfeder (8), und zumindest eine in axialer Richtung (A) der Kupplungsvorrichtung (2) durch die Tellerfeder (8) begrenzt verlagerbaren Anpressplatte (5) zur reibschlüssigen Klemmung einer Kupplungsscheibe (6) zwischen der Anpressplatte (5) und der Gegendruckplatte (4) aufweist, wobei die Tellerfeder (8) auf einem in radialer Richtung (R) der Kupplungsvorrichtung (2) außerhalb des Schwenkradius (17) angeordneten Wirkradius (19) auf die Anpressplatte (5) wirkt und auf einem in radialer Richtung (R) innerhalb des Schwenkradius (17) angeordneten Betätigungsradius (18) durch die Betätigungsvorrichtung (3) betätigbar ist, und wobei die fluidische Betätigungsvorrichtung (3) zumindest einen mittelbar oder unmittelbar auf die Tellerfeder (8) wirkenden Nehmerzylinder (20) mit einem Nehmerkolben (21) und zumindest einen fluidisch mit dem Nehmerzylinder (20) verbundenen Geberzylinder (24) mit einem Geberkolben (25) aufweist, **dadurch gekennzeichnet, dass** gilt: iDP = (Schwenkradius - Betätigungsradius) / (Wirkradius - Schwenkradius) >= 5, und bezüglich der Kolbenflächen gilt: iH = (Fläche Nehmerkolben) / (Fläche Geberkolben), wobei 1,5 <= iH <= 3,5.

2. Kupplungssystem (1) nach Anspruch 1, wobei der Kupplungsdeckel (7) aus einem Blechmaterial mit einer Materialdicke d <= 5 mm hergestellt ist.

3. Kupplungssystem (1) nach Anspruch 1 oder 2, wobei 5,5 <= iDP <= 6,5 gilt.

4. Kupplungssystem (1) nach Anspruch 2 oder 3, wobei 3 mm <= d <= 4,5 mm, vorzugsweise 3 mm <= d <= 4 mm, gilt.

5. Kupplungssystem (1) nach zumindest einem der Ansprüche 1 bis 4, wobei die Tellerfeder (8) im Bereich des Schwenkradius (17) verschwenkbar am Kupplungsdeckel (7) gelagert ist.

6. Kupplungssystem (1) nach Anspruch 5, wobei die verschwenkbare Lagerung (11) am Kupplungsdeckel (7) zumindest einen Drahtring (13) und/oder zumindest eine Stützfeder (14) umfasst, mit dem / mit der sich die Tellerfeder (8) kupplungsdeckelseitig und/oder anpressplattenseitig in Anlage befindet.

7. Kupplungssystem (1) nach Anspruch 5 oder 6, wobei die verschwenkbare Lagerung (11) kupplungsdeckelseitige Haken und/oder Bolzen (15) umfasst, durch die die Tellerfeder (8) mittelbar oder unmittelbar am Kupplungsdeckel (7) verschwenkbar befestigt ist.

8. Kupplungssystem (1) nach zumindest einem der Ansprüche 1 bis 7, wobei die Betätigungsvorrichtung (3) zumindest ein Kupplungspedal (27) mit einem Übersetzungsverhältnis 3,5 <= iP <= 5,5 aufweist.

9. Kupplungssystem (1) nach Anspruch 8, wobei das Kupplungspedal (27) mit einer Übertotpunktfeder ausgestattet ist, die die maximale Pedalkraft am Kupplungspedal (27) um 30 N bis 50 N, vorzugsweise um 35 N bis 45 N, verringert.

10. Kupplungssystem (1) nach Anspruch 7 oder 8, wobei das Kupplungspedal (27) einen maximalen Pedalweg (28) von 120 mm bis 160 mm, vorzugsweise von 130 mm bis 150 mm, aufweist.

**Claims**

1. Clutch system (1) having a clutch apparatus (2) and a fluidic actuating apparatus (3) for engaging and/or disengaging the clutch apparatus (2), the clutch apparatus (2) having at least one counterpressure plate (4), at least one clutch cover (7) with at least one cup spring (8) which is mounted pivotably on a pivoting radius (17), and at least one pressing plate (5) which can be moved to a limited extent in the axial direction (A) of the clutch apparatus (2) by way of the cup spring (8) for clamping a clutch disc (6) in a frictionally locking manner between the pressing plate (5) and the counterpressure plate (4), the cup spring (8) acting on the pressing plate (5) on an active radius (19) which is arranged outside of the pivoting radius (17) in the radial direction (R) of the clutch apparatus (2), and it being possible for the said cup spring (8) to be actuated by way of the actuating apparatus (3) on an actuating radius (18) which is arranged within the pivoting radius (17) in the radial direction (R), and the fluidic actuating apparatus (3) having at least one slave cylinder (20) which acts indirectly or directly on the cup spring (8) and has a slave piston (21), and at least one master cylinder (24) which is connected fluidically to the slave cylinder (20) and has a master piston (25), **characterized in that** it is the case that: iDP = (pivoting radius - actuating radius)/(active radius - pivoting radius) $\geq$ 5, and it is the case with regard to the piston surface areas that: iH = (surface area, slave piston)/(surface area, master piston), wherein $1.5 \leq iH \leq 3.5$.

2. Clutch system (1) according to Claim 1, the clutch cover (7) being manufactured from a sheet metal material with a material thickness d $\leq$ 5 mm.

3. Clutch system (1) according to Claim 1 or 2, it being the case that $5.5 \leq iDP \leq 6.5$.

4. Clutch system (1) according to Claim 2 or 3, it being the case that 3 mm $\leq$ d $\leq$ 4.5 mm, preferably that 3 mm $\leq$ d $\leq$ 4 mm.

5. Clutch system (1) according to at least one of Claims 1 to 4, the cup spring (8) being mounted on the clutch cover (7) pivotably within the range of the pivoting radius (17).

6. Clutch system (1) according to Claim 5, the pivotable mounting (11) on the clutch cover (7) comprising at least one wire ring (13) and/or at least one supporting spring (14), by way of which the cup spring (8) is in contact on the clutch cover side and/or on the pressing plate side.

7. Clutch system (1) according to Claim 5 or 6, the pivotable mounting (11) comprising clutch cover-side hooks and/or pins (15), by way of which the cup spring (8) is fastened pivotably to the clutch cover (7) indirectly or directly.

8. Clutch system (1) according to at least one of Claims 1 to 7, the actuating apparatus (3) having at least one clutch pedal (27) with a transmission ratio of $3.5 \leq iP \leq 5.5$.

9. Clutch system (1) according to Claim 8, the clutch pedal (27) being equipped with an over-dead-centre spring which reduces the maximum pedal force on the clutch pedal (27) by from 30 N to 50 N, preferably by from 35 N to 45 N.

10. Clutch system (1) according to Claim 7 or 8, the clutch pedal (27) having a maximum pedal travel (28) of from 120 mm to 160 mm, preferably of from 130 mm to 150 mm.

**Revendications**

1. Système d'embrayage (1) comprenant un dispositif d'embrayage (2) et un dispositif d'actionnement fluidique (3) destiné à engager et/ou désengager le dispositif d'embrayage (2), le dispositif d'embrayage (2) comportant au moins une plaque de pression antagoniste (4), au moins un carter d'embrayage (7) pourvu d'au moins un ressort à disque (8) monté à pivotement sur un rayon de pivotement (17) et au moins une plaque de pression (5) pouvant être déplacée dans la direction axiale (A) du dispositif d'embrayage (2) en étant limitée par le ressort à disque (8) pour serrer par friction un disque d'embrayage (6) entre la plaque de pression (5) et la plaque de pression antagoniste (4), le ressort à disque (8) agissant sur la plaque de pression (5) sur un rayon d'action (19) disposé à l'extérieur du rayon de pivotement (17) dans la direction radiale (R) du dispositif d'embrayage (2) et pouvant être actionné par le dispositif d'actionnement (3) sur une rayon d'actionnement (18), disposé dans la direction radiale (R) à l'intérieur du rayon de pivotement (17), et le dispositif d'actionnement fluidique (3) comportant au moins un cylindre récepteur (20), qui agit directement ou indirectement sur le ressort à disque (8) avec un piston récepteur (21), et au moins un maître-cylindre (24) qui est relié fluidiquement au cylindre récepteur (20) et qui comporte un piston-maître (25), **caractérisé en ce que** : l'on a iDP = (rayon de pivotement - rayon d'actionnement)/(rayon d'action - rayon de pivotement) >= 5, et par rapport à la surface du piston l'on a : iH = (surface de piston récepteur)/(surface de piston-maître), avec 1,5 <= iH <= 3,5.

**2.** Système d'embrayage (1) selon la revendication 1, le carter d'embrayage (7) est fabriqué en un matériau en tôle ayant une épaisseur de matériau d <= 5 mm.

**3.** Système d'embrayage (1) selon la revendication 1 ou 2, avec 5,5 <= iDP <= 6,5.

**4.** Système d'embrayage (1) selon la revendication 2 ou 3, avec 3 mm <= d <= 4,5 mm, de préférence 3 mm <= d <= 4 mm.

**5.** Système d'embrayage (1) selon l'une au moins des revendications 1 à 4, le ressort à disque (8) étant monté sur le carter d'embrayage (7) de manière pivotante dans la zone du rayon de pivotement (17).

**6.** Système d'embrayage (1) selon la revendication 5, le montage pivotant (11) sur le carter d'embrayage (7) comprenant au moins un anneau filaire (13) et/ou au moins un ressort de support (14), avec lequel le ressort à disque (8) est en appui du côté du carter d'embrayage et/ou du côté de la plaque de pression.

**7.** Système d'embrayage (1) selon la revendication 5 ou 6, le montage pivotant (11) comportant des crochets et/ou boulons (15) côté carter d'embrayage qui permettent de fixer de manière pivotante le ressort à disque (8) indirectement ou directement sur le carter d'embrayage (7).

**8.** Système d'embrayage (1) selon l'une au moins des revendications 1 à 7, le dispositif d'actionnement (3) comportant au moins une pédale d'embrayage (27) ayant un rapport de transmission de 3,5 <= iP <= 5,5.

**9.** Système d'embrayage (1) selon la revendication 8, la pédale d'embrayage (27) étant équipée d'un ressort de point mort haut qui réduit la force de pédale maximale sur la pédale d'embrayage (27) de 30 N à 50 N, de préférence de 35 N à 45 N.

**10.** Système d'embrayage (1) selon la revendication 7 ou 8, la pédale d'embrayage (27) ayant une course de pédale maximale (28) de 120 mm à 160 mm, de préférence de 130 mm à 150 mm.

Fig. 1

Fig. 2

EP 3 247 918 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014211468 A1

- DE 102013206548 A1